(19) Europäisches Patentamt
European Patent Office
Office européen des brevets

(11) EP 3 559 374 B1

(12) **EUROPÄISCHE PATENTSCHRIFT**

(45) Veröffentlichungstag und Bekanntmachung des Hinweises auf die Patenterteilung:
**26.04.2023 Patentblatt 2023/17**

(21) Anmeldenummer: **17840480.2**

(22) Anmeldetag: **21.12.2017**

(51) Internationale Patentklassifikation (IPC):
***E04G 21/04*** *(2006.01)*

(52) Gemeinsame Patentklassifikation (CPC):
**E04G 21/0463; E04G 21/0436**

(86) Internationale Anmeldenummer:
**PCT/EP2017/084028**

(87) Internationale Veröffentlichungsnummer:
**WO 2018/115248 (28.06.2018 Gazette 2018/26)**

(54) **GROSSMANIPULATOR MIT AUTOMATISIERTEM MASTAUFBAU**

LARGE MANIPULATOR WITH AUTOMATED BOOM CONSTRUCTION

MANIPULATEUR DE GRANDE TAILLE AVEC STRUCTURE DE MÂT AUTOMATISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2016 DE 102016125145**

(43) Veröffentlichungstag der Anmeldung:
**30.10.2019 Patentblatt 2019/44**

(73) Patentinhaber: **Schwing GmbH**
**44653 Herne (DE)**

(72) Erfinder:
- **BERTRAM, Torsten**
  **40547 Düsseldorf (DE)**
- **RÖSMANN, Christoph**
  **45128 Essen (DE)**
- **HOFFMANN, Frank**
  **44388 Dortmund (DE)**
- **MUSTER, Freia Irina**
  **58239 Schwerte (DE)**
- **HENIKL, Johannes**
  **46282 Dorsten (DE)**
- **KRÄMER, Maximilian**
  **44534 Lünen (DE)**

(74) Vertreter: **Schneiders & Behrendt Bochum**
**Huestraße 23**
**44787 Bochum (DE)**

(56) Entgegenhaltungen:
**WO-A1-2014/166637**
**WO-A1-2015/109976**
**WO-A2-2018/100074**
**DE-A1-102008 017 961**
**DE-A1-102015 108 473**

- **Wildan Lalo: "Ein Beitrag zur Entwicklung von Assistenzsystemen für serielle und parallele Roboter am Beispiel von Autobetonpumpen und seilbasierten Regalbediengeräten", , 1 January 2014 (2014-01-01), XP055383260, Retrieved from the Internet: URL:https://duepublico.uni-duisburg-essen.de/servlets/DerivateServlet/Derivate-35035/Lalo_Diss.pdf [retrieved on 2017-06-20]**
- **Brendel Elmar: "Optimale Steuerung zur Kompensation der Pfadabdrängung von Industrierobotern Optimal Control of Milling Industrial Robots Master-Thesis by Elmar Brendel", , 31 August 2011 (2011-08-31), pages 1-91, XP055806467, Internet Retrieved from the Internet: URL:https://www.sim.informatik.tu-darmstadt.de/publ/da/2011-Brendel-Masterthesis.pdf [retrieved on 2021-05-21]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 559 374 B1

## Beschreibung

Die Erfindung betrifft einen Großmanipulator, insbesondere eine Autobetonpumpe, mit einem um eine vertikale Achse mittels eines Drehantriebs drehbaren Mastbock, der auf einem Gestell angeordnet ist, einem Knickmast, der zwei oder mehr Mastarme umfasst, wobei die Mastarme über Knickgelenke mit dem jeweils benachbarten Mastbock oder Mastarm mittels je eines Schwenkantriebs schwenkbeweglich verbunden sind, und mit einer die Antriebe ansteuernden Steuereinrichtung für die Mastbewegung.

Ein solcher Großmanipulator wird in DE 10 2008 017 961 A1 und WO 2014/166637 A1 beschrieben. Ferner offenbart die WO 2015/109976 A1 eine Autobetonpumpe. In DE 10 2015 108473 A1 wird ein Großmanipulator, insbesondere eine Autobetonpumpe offenbart, mit einem um eine vertikale Achse mittels eines Drehantriebs drehbaren Mastbock, der auf einem Gestell angeordnet ist, einem Knickmast, der zwei oder mehr Mastarme umfasst, wobei die Mastarme über Knickgelenke mit dem jeweils benachbarten Mastbock oder Mastarm mittels je eines Schwenkantriebs schwenkbeweglich verbunden sind, mit einer die Antriebe ansteuernden Steuereinrichtung für die Mastbewegung und mit einer Mastsensorik zur Erfassung der Lage mindestens eines Punktes des Knickmastes oder eines Schwenkwinkels zumindest eines Knickgelenks. WO 2018/100074 A2 offenbart einen ähnlichen Großmanipulator, insbesondere eine Autobetonpumpe.

Außerdem betrifft die Erfindung ein Verfahren zur Steuerung der Bewegung eines Knickmastes eines Großmanipulators, insbesondere einer Autobetonpumpe.

Großmanipulatoren sind in einer Vielzahl von Ausgestaltungen aus dem Stand der Technik bekannt. Einen Großmanipulator mit Knickmast offenbart zum Beispiel die WO 2014/166637 A1. Die WO 2014/166637 A1 schlägt einen Großmanipulator vor, bei dem die Steuereinrichtung einen Eilgang für den Drehantrieb des Mastbocks vorsieht, um den Knickmast mit erhöhter Geschwindigkeit in die gewünschte Arbeitsposition zu drehen, wobei der Eilgang nur dann wählbar ist, wenn der Mast oder Ausleger vollständig zusammengefaltet ist. Ein einzelner Sensor, der mit der Steuereinrichtung zusammenwirkt, ist bei dem vorbekannten Großmanipulator vorgesehen, wobei über den Sensor feststellbar ist, ob der Knickmast vollständig zusammengefaltet ist oder nicht. Der Sensor erzeugt ein Freigabesignal an die Steuereinrichtung, solange sichergestellt ist, dass der Knickmast zusammengefaltet ist und damit einen minimalen Radius aufweist. In diesem Zustand kann der Knickmast mit erhöhter Geschwindigkeit gedreht werden. Damit werden die gesetzlichen Normvorgaben für die Mastspitzengeschwindigkeit gegenüber einer konventionellen Maststeuerung besser ausgenutzt, bei der die Maximalgeschwindigkeiten der einzelnen hydraulischen Antriebe der Gelenke nach einer Worst-Case-Betrachtung ausgelegt werden. Diese Worst-Case-Betrachtung berücksichtigt die Maststellung mit jeweils maximal möglichem Abstand zwischen dem betreffenden Gelenk und der Mastspitze.

Wie in der vorhergenannten Schrift schon erkannt wurde, wird die Dauer für die Inbetriebnahme eines Großmanipulators auf einer Baustelle heute wesentlich durch die Zeit für das Aufbauen des Mastes, also das Ausfalten des Kickmastes, bestimmt. Gründe für die lange Aufbauzeit des Mastes liegen zum einen in der oben erwähnten konventionellen Auslegung der Maximalgeschwindigkeiten der einzelnen Antriebe hinsichtlich der Normvorgaben für die maximale Geschwindigkeit der Mastspitze, welche die Betriebssicherheit gewährleisten und eine Gefährdung von Personen auf der Baustelle verhindern sollen. Zum anderen erfordert die gleichzeitige Steuerung von mehreren Gelenken mit hohen Geschwindigkeiten ein hohes Geschick von dem Benutzer. Typischerweise erfolgen die manuell gesteuerten Bewegungsabläufe daher eher sequentiell mit entsprechenden Sicherheitsabständen zu möglichen Kollisionsobjekten. Dies ist hinsichtlich der Aufbauzeit jedoch nicht effizient.

Ein weiterer begrenzender Faktor für die Aufbauzeit ist die maximale Förderleistung der Hydraulikpumpen, welche den Hydraulikkreislauf der Masthydraulik mit Öl versorgen. Im laufenden Betrieb bei gleichzeitiger Betätigung mehrerer Gelenke mit großen Antriebszylindern kann eine Unterversorgung eintreten, sodass die einzelnen Antriebe nicht mit der vorgegebenen Geschwindigkeit bewegt werden können.

Vor diesem Hintergrund ist es Aufgabe der Erfindung, einen verbesserten Großmanipulator bereitzustellen. Insbesondere soll der Knickmast möglichst schnell aus dem vollständig eingefalteten Zustand in seine gewünschte Arbeitsposition gebracht werden können. Weiter soll der Knickmast aus der Arbeitsposition möglichst schnell in die vollständig eingefaltete Stellung überführt werden können. Zudem soll der Knickmast im aufgebauten Zustand zügig von einer Ausgangsposition zu einer anderen Zielposition verfahrbar sein.

Diese Aufgabe löst die Erfindung ausgehend von einem Großmanipulator der eingangs genannten Art dadurch, dass die Steuereinrichtung dazu eingerichtet ist, eine zeitoptimierte Steuerungsabfolge für die Ansteuerung der Antriebe durch numerisches Lösen eines dynamischen Optimierungsproblems mit Randbedingungen zu berechnen, indem eine Gütefunktion minimiert wird, welche die Gesamtzeit eines Faltvorgangs beim Überführen des Kickmastes (5) aus einer Ausgangsposition in eine Zielposition oder eine davon direkt abgeleitete Größe als Optimierungsvariable enthält, wobei die Steuereinrichtung dazu eingerichtet ist, den Knickmast in der Steuerungsabfolge für die Ansteuerung der Antriebe aus der Ausgangsposition des Knickmastes autonom und zeitoptimiert in die vorgegebene Zielposition des Knickmastes zu überführen.

Zur Verringerung insbesondere der Aufbauzeit des Kickmastes wird vorgeschlagen, den Benutzer durch eine Steuereinrichtung zu unterstützen, die den Knickmast aus einer Ausgangsposition des Knickmastes, wie dem eingefalteten Zustand, autonom in eine vorgegebene Zielposition des Knickmastes, an der er z.B. die gewünschte Betonierstelle erreicht, zu überführen. Hierzu führt die Steuereinrichtung autonom eine Steuerungsabfolge aus, gemäß der die Antriebe angesteuert werden. Die Steuerungsabfolge, ist, anders ausgedrückt, eine Sequenz von Steuersignalen, mit denen die Antriebe des Großmanipulators angesteuert werden. Die Steuerungsabfolge für die Ansteuerung der Antriebe kann durch die autonome Ansteuerung mittels der Steuereinrichtung komplexer sein als bei manueller Bedienung und die gleichzeitige Betätigung mehrerer oder sogar aller Antriebe des Knickmastes vorsehen. Der Benutzer muss der Steuereinrichtung lediglich die Zielposition des Knickmastes vorgeben. Aus Sicherheitsgründen sollte die autonome Ansteuerung der Antriebe durch die Steuereinrichtung von dem Benutzer des Großmanipulators während der Steuerungsabfolge permanent freigegeben werden, um z.B. Kollisionen mit unerwartet auftauchenden Hindernissen zu vermeiden. Die Grenzen des Systems können dabei möglichst gut ausgenutzt werden. Hierzu werden unter anderem gegenüber einer konventionellen Maststeuerung höhere Geschwindigkeiten der einzelnen Antriebe des Knickmastes unter Beibehaltung der durch Normen vorgegebenen Maximalgeschwindigkeit der Mastspitze zugelassen.

Erfindungsgemäß ist vorgesehen, dass die Steuereinrichtung dazu eingerichtet ist, die Steuerungsabfolge für die Ansteuerung der Antriebe durch numerisches Lösen eines dynamischen Optimierungsproblems mit Randbedingungen zu berechnen. Zur numerischen Lösung des dynamischen Optimierungsproblems kann auf bekannte und bewährte Algorithmen zurückgegriffen werden, um zuverlässig die Steuerungsabfolge unter Einhaltung der Randbedingungen zu erhalten.

Vorteilhafte Ausgestaltungen und Weiterbildungen der Erfindung ergeben sich aus den abhängigen Ansprüchen.

Gemäß einer vorteilhaften Ausgestaltung der Erfindung ist vorgesehen, dass der Knickmast eine Mastspitze aufweist, wobei die Zielposition des Knickmastes durch die vorgegebene Position der Mastspitze definiert ist. Die Vorgabe der Zielposition für die Mastspitze macht den Knickmast nach autonomer

Überführung des Knickmastes aus der Ausgangsposition in die vorgegebene Zielposition einsetzbar. Die Steuereinrichtung steuert die vorgegebene Zielposition für die Ansteuerung der Antriebe autonom an, sodass die Mastspitze die Zielposition automatisch erreicht.

Eine vorteilhafte Ausführung ist, dass die Vorgabe der Zielposition des Knickmastes durch den Bediener per Auswahl in einer grafischen Darstellung erfolgt, wobei die grafische Darstellung eine Auswahl aus mehreren möglichen Zielpositionen des Knickmastes bietet. Anhand der grafischen Darstellung kann der Benutzer die Zielposition sehr einfach und anschaulich vorgeben. Vorzugsweise zeigt die grafische Darstellung den Arbeitsbereich des Großmanipulators aus der Vogelperspektive, sodass mögliche Zielpositionen intuitiv auswählbar sind.

Eine bevorzugte Ausführung sieht vor, dass die Steuereinrichtung die Steuerungsabfolge für die Ansteuerung der Antriebe in der Weise ermittelt, dass die Gesamtzeit für die Überführung des Knickmastes aus der Ausgangsposition in die vorgegebene Zielposition minimal ist. Die Auswahl der Steuerungsabfolge für die Ansteuerung der Antriebe anhand der minimalen Gesamtzeit sorgt für eine Zeitoptimierung der autonomen Ansteuerung des Knickmastes mittels der Steuereinrichtung.

In einer weiter bevorzugten Variante ist vorgesehen, die Steuerungsabfolge für die Ansteuerung der Antriebe so zu ermitteln, dass die Gesamtzeit für die Überführung des Knickmastes aus einer Ausgangsposition in eine vorgegebene Zielposition eine vordefinierte Maximalzeit nicht überschreitet. Gegenüber der oben erwähnten Minimierung der Gesamtzeit für das Anfahren der Zielposition ergibt sich hier der Vorteil, dass die Ermittlung der Steuerungsabfolge unter Umständen einfacher bzw. schneller möglich ist.

Besonders vorteilhaft ist die Weiterbildung, dass eine Mastsensorik zur Erfassung der Lage mindestens eines Punktes des Knickmastes oder eines Schwenkwinkels zumindest eines Knickgelenks vorgesehen ist, wobei die Steuereinrichtung dazu eingerichtet ist, die Position des Knickmastes basierend auf dem Ausgangssignal der Mastsensorik zu bestimmen. Eine derartige Mastsensorik kann zum einen genutzt werden, um die Bewegung des Knickmastes während der Ansteuerung im Rahmen der Steuerungsabfolge zu überwachen. Weiterhin kann mit der Mastsensorik überprüft werden, ob der Knickmast die vorgegebene Zielposition erreicht hat um dann die Steuerungsabfolge zu beenden.

Weiter vorteilhaft ist die Ausgestaltung, dass die Steuereinrichtung dazu eingerichtet ist, basierend auf dem Ausgangssignal der Mastsensorik die Ausgangsposition des Knickmastes zu bestimmen. Durch die sensorische Erfassung der momentanen Mastposition als Ausgangsposition kann von jeder Mastposition aus der Knickmast autonom durch eine ermittelte Steuerungsabfolge in eine vorgegebene Zielposition überführt werden.

Eine vorteilhafte Ausführungsform der Erfindung sieht vor, dass die Steuereinrichtung dazu eingerichtet ist, basierend auf dem Ausgangssignal der Mastsensorik die Steuerungsabfolge für die Ansteuerung der Antriebe zur autonomen Überführung des Knickmastes in eine vorgegebene Zielposition des Knickmastes zu ermitteln. Diese Ausgestaltung hat den Vorteil, dass die Steuereinrichtung, abhängig von der aktuellen Ausgangsposition, eine Steuerungsabfolge für die Ansteuerung der Antriebe selbstständig auswählt oder berechnet. Es können bestimmte Steuerungsabfolgen, die den Knickmast aus einer Anzahl von vorgegebenen möglichen Ausgangspositionen in eine Anzahl von vorgegebenen, möglichen Zielposition überführen, in der Steuereinrichtung vorab hinterlegt werden. Die Steuereinrichtung wählt dann nur die geeignete Steuerungsabfolge aus. Alternativ führt die Steuereinrichtung eine Berechnung der Steuerungsabfolge beispielsweise unter Optimierung der für die Überführung aus der Ausgangsposition in die Zielposition benötigten Zeit aus. Die Steuerungsabfolge kann dabei z.B. anhand eines iterativen Verfahrens ermittelt werden. Dadurch wird die Flexibilität erhöht, da es hinsichtlich der möglichen Ausgangs- und Zielpositionen weniger Beschränkungen gibt. In beiden Fällen wird der Benutzer dahingehend unterstützt, dass er die Überführung des Knickmastes aus der Ausgangsposition in die Zielposition lediglich überwachen muss.

Eine bevorzugte Ausführung sieht vor, dass die Steuereinrichtung einen Speicher aufweist, wobei der Speicher auslesbare Steuerungsabfolgen für die Ansteuerung der Antriebe umfasst. Ein solcher Datenspeicher ist dazu geeignet zahlreiche Steuerungsabfolgen für die Ansteuerung der Antriebe abzuspeichern, sodass diese nicht oder nicht erneut durch die Steuereinrichtung errechnet werden müssen.

Besonders vorteilhaft ist die Weiterbildung, wenn als Randbedingungen für das dynamische Optimierungsproblem der Schwenkbereich der einzelnen Knickgelenke und / oder die maximal erreichbaren Verschwenkgeschwindigkeiten der einzelnen Knickgelenke und / oder die maximal erlaubte Geschwindigkeit der Mastspitze und / oder die maximal zulässige kinetische Energie des Knickmastes und / oder die Fördermenge der die Masthydraulik versorgenden Hydraulikpumpe und / oder die Kollisionsfreiheit und / oder die Abstützungskonfiguration des Großmanipulators vorgesehen sind. Die teilweise oder vollständige Berücksichtigung dieser Randbedingungen für die numerische Lösung des dynamischen Optimierungsproblems liefert zuverlässig und situationsgerecht jeweils die optimale Steuerungsabfolge für die Ansteuerung der Antriebe zur Überführung des Knickmastes aus der Ausgangsposition in die Zielposition.

Wegen der durch die Erfindung zur Verfügung stehenden hohen Geschwindigkeiten der Mastbewegung ermittelt die Steuereinrichtung gemäß einer vorteilhaften Ausgestaltung der Erfindung unter Berücksichtigung der Maststellung und der Mastgeschwindigkeit die kinetische Energie des Knickmastes bei der Mastbewegung und begrenzt die Mastgeschwindigkeit über die Steuerung der Antriebe so, dass eine maximale kinetische Energie des Knickmastes bei seiner Bewegung nicht überschritten wird. Mit dieser Maßnahme wird verhindert, dass es bei einer abrupten Beschleunigung oder Verzögerung der Mastbewegung zu einer mechanischen Überlastung des Knickmastes kommt.

Die Erfindung ermöglicht es, an einzelnen Knickgelenken des Mastes höhere Verfahrgeschwindigkeiten im Vergleich zu einer konventionellen Maststeuerung zuzulassen, da die maximal erlaubte Geschwindigkeit der Mastspitze als Randbedingung für die Lösung des dynamischen Optimierungsproblems berücksichtigt wird. Damit kann der gesetzlich vorgegebene Rahmen für die Mastgeschwindigkeit gegenüber dem Stand der Technik besser ausgenutzt werden.

Ferner ist Gegenstand der Erfindung ein Verfahren zur Steuerung der Bewegung eines Knickmastes eines Großmanipulators, insbesondere einer Autobetonpumpe, mit einem um eine vertikale Achse mittels eines Drehantriebs drehbaren Mastbock, der auf einem Gestell angeordnet ist, einem Knickmast, der zwei oder mehr Mastarme umfasst, wobei die Mastarme über Knickgelenke mit dem jeweils benachbarten Mastbock oder Mastarm mittels je eines Schwenkantriebs schwenkbeweglich verbunden sind, mit einer die Antriebe ansteuernden Steuereinrichtung für die Mastbewegung, wobei die Steuereinrichtung eine zeitoptimierte Steuerungsabfolge für die Ansteuerung der Antriebe durch numerisches Lösen eines dynamischen Optimierungsproblems mit Randbedingungen berechnet, indem eine Gütefunktion minimiert wird, welche die Gesamtzeit eines Faltvorgangs beim Überführen des Kickmastes aus einer Ausgangsposition in eine Zielposition oder eine davon direkt abgeleitete Größe als Optimierungsvariable enthält, wobei die Antriebe mit der Steuerungsabfolge von der Steuereinrichtung angesteuert werden und der Knickmast in dieser Steuerungsabfolge aus der Ausgangsposition des Knickmastes autonom und zeitoptimiert in die vorgegebene Zielposition des Knickmastes überführt wird.

Durch ein solches Verfahren lässt sich beispielweise der Aufbauvorgang des Knickmastes deutlich vereinfachen. Der Benutzer wird hier durch die Steuereinrichtung unterstützt, die den Knickmast aus einer Ausgangsposition des Knickmastes, wie dem eingefalteten Zustand, autonom in eine vorgegebene Zielposition des Knickmastes, wie die Betonierstelle, überführt. Die Steuerungsabfolge für die autonome Ansteuerung der Antriebe kann komplexer sein und die gleichzeitige Betätigung mehrerer oder sogar aller Antriebe des Knickmastes vorsehen. Bei diesem Verfahren muss der Benutzer der Steuereinrichtung lediglich die Zielposition des Knickmastes vorgeben. Ein solches Verfahren nutzt die Grenzen des Systems sehr gut aus, indem beispielsweise höhere Geschwindigkeiten der einzelnen Antriebe des Knickmastes unter Beibehaltung der normativ gegebenen Maximalgeschwindigkeit der Mastspitze zugelassen werden.

Vorteilhafte Ausgestaltungen und Weiterbildungen hinsichtlich des Verfahrens ergeben sich aus den abhängigen Ansprüchen.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigen:

Figur 1: erfindungsgemäßer Großmanipulator mit Knickmast in ausgefalteter Stellung,

Figur 2: erfindungsgemäßer Großmanipulator mit Knickmast in eingefalteter Stellung,

Figur 3: grafische Darstellung zur Steuerung des Knickmastes eines Großmanipulators.

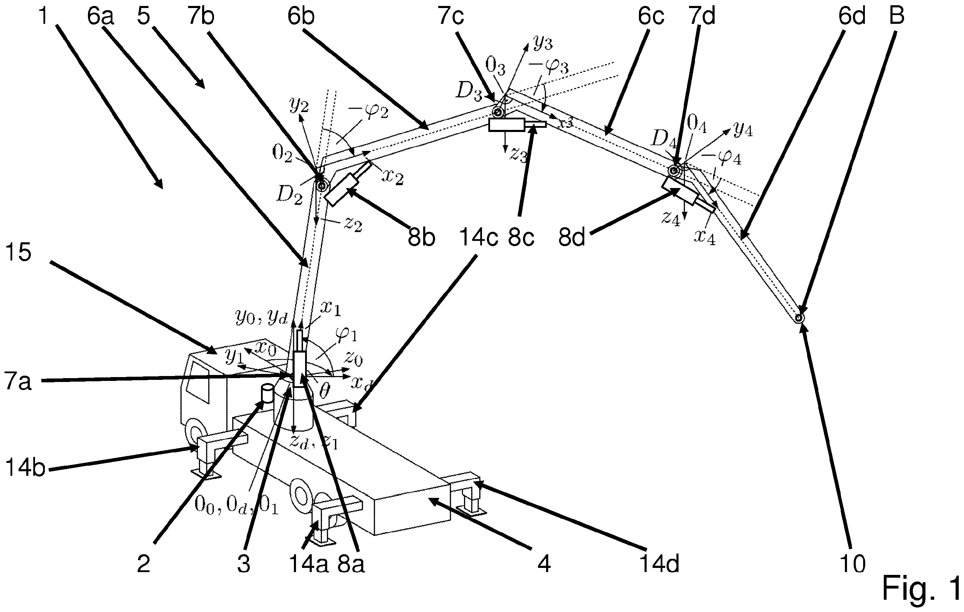

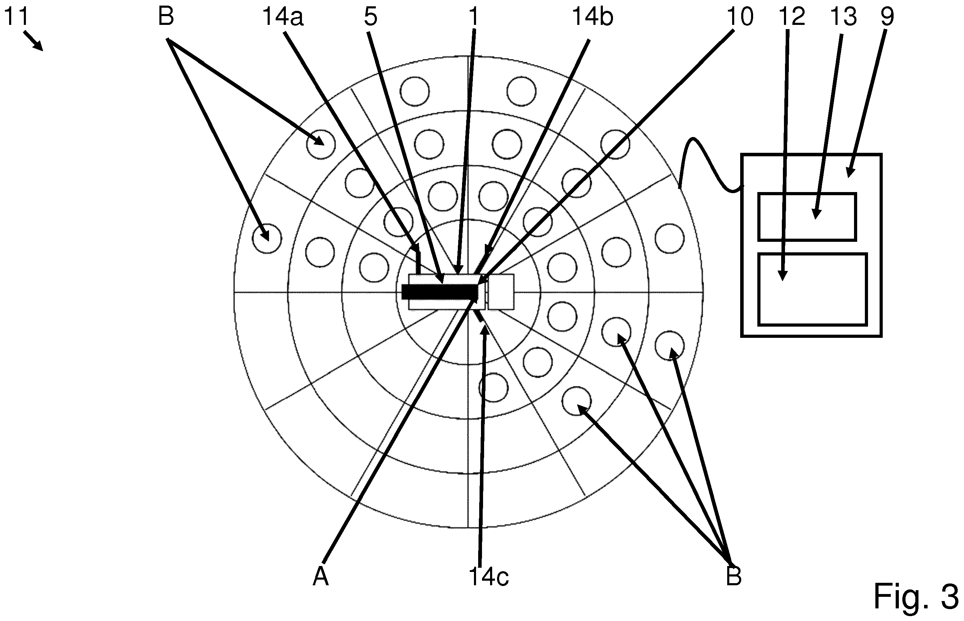

Die Figur 1 zeigt schematisch einen erfindungsgemäßen Großmanipulator, nämlich eine Autobetonpumpe, die insgesamt mit der Bezugsziffer 1 bezeichnet ist. Im Rahmen dieser Offenbarung wird unter dem Begriff Großmanipulator 1 eine Arbeitseinrichtung wie zum Beispiel ein Arm, ein Ausleger, ein Hubwerk, ein Hubgerüst oder ein Mast verstanden. Der Großmanipulator 1 weist einen ausfaltbaren Knickmast 5 auf, der auf einem um eine vertikale Achse $y_0$ drehbaren Mastbock 3 angeordnet ist. Diese Drehung des Mastbockes 3 um die vertikale Achse wird über einen Drehantrieb 2 eingeleitet, welcher aus einem Getriebe und einem vorzugsweise über ein proportionales Stellventil anzusteuernden Hydraulikmotor besteht. Der Knickmast 5 ist an dem Mastbock 3 angelenkt und weist eine Mehrzahl, im Ausführungsbeispiel insgesamt vier Mastarme 6a, 6b, 6c, 6d auf, welche an Knickgelenken 7a, 7b, 7c, 7d jeweils um Knickachsen gegenüber einem benachbarten Mastarm 6a, 6b, 6c, 6d oder dem Mastbock 3 mittels je eines Schwenkantriebes 8a, 8b, 8c, 8d verschwenkbar sind. Der erste Mastarm 6a ist an dem Mastbock 3 über ein Gelenk um eine horizontale Achse im Knickgelenk 7a schwenkbeweglich angebracht. Die Schwenkbewegung des ersten Mastarmes 6a wird durch den ersten Schwenkantrieb 8a bewirkt. Die übrigen Mastarme 6b, 6c und 6d sind mit den jeweils benachbarten Mastarmen über die Knickgelenke 7b, 7c, 7d um zueinander parallele, horizontale Achsen schwenkbeweglich verbunden. Die Schwenkbewegung wird in diesen Knickgelenken 7b, 7c, 7d durch einen der Schwenkantriebe 8b, 8c, 8d bewirkt. Die Schwenkantriebe weisen jeweils einen (oder mehrere) Hydraulikzylinder auf, die vorzugsweise über proportional arbeitende Stellventile angesteuert werden. Diese sowie das Stellventil für den Hydraulikmotor des Drehantriebs 2 wiederum werden von einer elektronischen Steuereinrichtung 9 (Fig. 3) für die Mastbewegung gesteuert. Im Ausführungsbeispiel weist das Gestell 4 des Großmanipulators 1 vier ausfahrbare Stützen 14a, 14b, 14c, 14d zur Abstützung am Untergrund auf. In der Darstellung gemäß Figur 1 ist gut zu erkennen, dass alle Stützen 14a, 14b, 14c, 14d vollständig ausgefahren / abgeklappt sind, sodass der Knickmast 5 in dieser Abstützungskonfiguration in jede Richtung um die vertikale Achse gedreht werden kann, ohne dass der Großmanipulator 1 seine Standsicherheit verliert. Auf diese Weise kann die Mastspitze 10 jede mit dem Knickmast 5 erreichbare Zielposition B einnehmen.

Der Großmanipulator 1 weist vorzugsweise eine Mastsensorik, beispielsweise in Form von Winkelsensoren für die Gelenke und die Drehung des Mastbocks 3, Wegsensoren zur Erfassung der Kolbenpositionen der einzelnen Hydraulikzylinder oder geodätische Neigungssensoren, auf. Mithilfe der Mastsensorik werden beispielsweise der Drehwerkwinkel $\varphi_{DW}$, die Verdrehung des Mastbocks 3, die Schwenkwinkel $\varphi_1$, $\varphi_2$, $\varphi_3$ und $\varphi_4$ der Knickgelenke 7a, 7b, 7c, 7d erfasst, wobei die Steuereinrichtung 9 vorzugsweise durch entsprechende Ansteuerung der Ventile der Hydraulikzylinder und des Hydraulikmotors des Drehantriebs 2 die Geschwindigkeit der Mastbewegung abhängig von dem Drehwerkwinkel $\varphi_{DW}$ und den momentanen Schwenkwinkeln $\varphi_1$, $\varphi_2$, $\varphi_3$ und $\varphi_4$ der Knickgelenke 7a, 7b, 7c, 7d steuert.

Im Folgenden wird ein Ausführungsbeispiel eines Algorithmus, in diesem Beispiel ein iteratives Verfahren zur Zeitoptimierung der erfindungsgemäßen Maststeuerung, anhand eines Großmanipulators 1 im Einzelnen erläutert. Der Großmanipulator 1 weist einen Knickmast 5 mit einer beliebigen Anzahl von $N$ Gelenken auf, der mit dem Mastbock 3 an einem festen Punkt auf dem Gestell 4 verankert ist.

Figur 1 zeigt repräsentativ den Fall einer Autobetonpumpe 1 mit einem $N = 4$ Gelenke aufweisenden Knickmast 5. Die elastische Deformation der einzelnen Mastarme 6a, 6b, 6c, 6d wird vernachlässigt, sodass diese als Starrkörper betrachtet werden. Der Algorithmus kann bei Bedarf entsprechend erweitert werden, um auch elastische Mastarme 6a, 6b, 6c, 6d zu berücksichtigen.

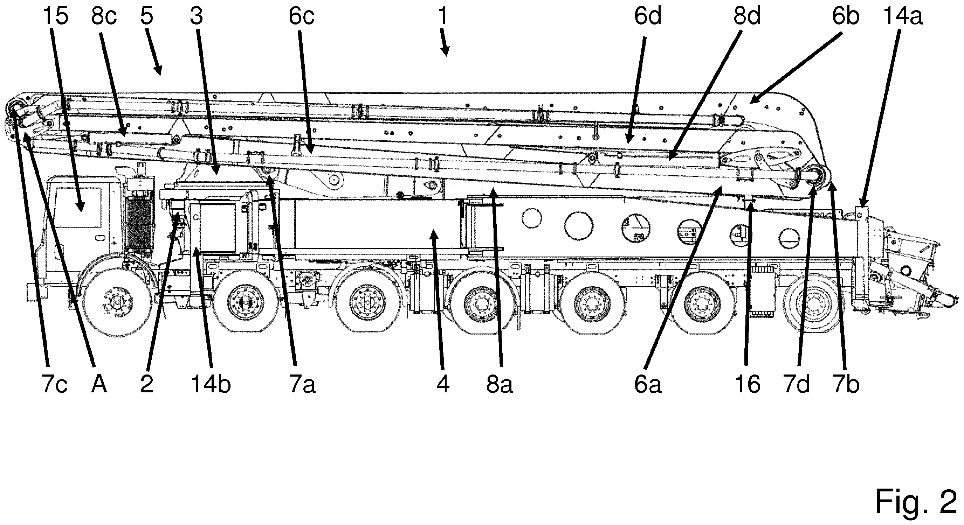

Zur Bestimmung einer Steuerungsabfolge für die Ansteuerung der Antriebe 2, 8a, 8b, 8c, 8d aus einer Ausgangsposition A (z.B. gezeigt in Fig. 2) des Knickmastes 5 autonom in eine vorgegebene Zielposition B (siehe z.B. Fig. 3) des Knickmastes 5 ist die Beschreibung der Kinematik des Systems erforderlich. Die Bestimmung der in diesem Beispiel zeitoptimierten Steuerungsabfolge stellt ein dynamisches Optimierungsproblem dar, welches im Allgemeinen nur numerisch mit einem iterativen Verfahren gelöst werden kann. Für die mathematische Formulierung dieses Optimierungsproblems muss ein geeignetes mathematisches Modell des dynamischen Verhaltens des Systems samt seiner Randbedingungen zugrunde gelegt werden. Anhand der Vereinfachung des Systems als Starrkörperproblem können die Gelenk- und Drehwerkwinkelgeschwindigkeiten des Knickmastes 5 als Eingangsgrößen des Systems angenommen werden:

$$\dot{\boldsymbol{\varphi}} = \mathbf{u},$$

$$\boldsymbol{\varphi}(t_0) = \boldsymbol{\varphi}_0.$$

Dabei bezeichnet der Vektor $\varphi = [\varphi_{DW}, \varphi_1,..., \varphi_N]^T$ die Freiheitsgrade des Systems, welche durch die Winkel der Knickgelenke 7a, 7b, 7c, 7d und den Drehwinkel des Mastbocks 3 um die vertikale Achse gegeben sind, $\mathbf{u} = [u_{DW}, u_1, ..., u_N]^T$ den Eingangsvektor der gewünschten Winkelgeschwindigkeiten und $\varphi_0$ die Winkel des Systems in der Ausgangsposition A (z.B. Transportstellung gemäß Fig. 2) bzw. eventuell eine beliebige Stellung des Mastes zum Anfangszeitpunkt $t = t_0$. Anzumerken ist, dass im Allgemeinen das Hydrauliksystem dazu eingerichtet ist, die Geschwindigkeiten der Hydraulikzylinder vorzugeben. Bei Kenntnis des kinematischen Zusammenhangs zwischen Gelenkwinkel und Kolbenposition des betreffenden Zylinders können jedoch Gelenkwinkelgeschwindigkeiten immer in entsprechende Kolbengeschwindigkeiten für den Zylinder umgerechnet werden. Der Mast soll in minimaler Zeit $t_e^*$ in die Zielposition B, also $\varphi_d$ überführt werden, welche durch den Benutzer in Form von Zylinderkoordinaten $\mathbf{x}_{EP,N}^d$ des letzten Mastarms 6d angegeben werden. Da der kinematische Zusammenhang $x_{EP,N} = f_{EP,N}(\varphi)$ zwischen den Koordinaten der Endpunkte der Mastarme 6a, 6b, 6c, 6d und den Freiheitsgraden des Systems durch dessen Redundanz (mehr Freiheitsgrade als Raumkoordinaten) nicht eindeutig ist, muss noch ein zusätzliches Kriterium eingeführt werden, wie $\varphi_d$ als Zielposition B festgelegt werden soll. Dies kann zum Bespiel die Forderung nach der Bildung eines möglichst gleichförmigen Bogens durch den Knickmast 5 sein, was durch möglichst gleiche Schwenkwinkel für die Knickgelenke 7b, 7c, 7d und gegebenenfalls 7a erreicht werden kann.

Damit kann das dynamische Optimierungsproblem in seiner minimalsten Form durch

$$\min_{\mathbf{u}(t)} \quad \int_{t_0}^{t_e} 1\mathrm{d}t = t_e - t_0$$

$$\begin{aligned} \text{u.B.v.} \quad & \dot{\boldsymbol{\varphi}} = \mathbf{u}, \\ & \boldsymbol{\varphi}(t_0) = \boldsymbol{\varphi}_0, \\ & \boldsymbol{\varphi}(t_e) = \boldsymbol{\varphi}_d \end{aligned}$$

dargestellt werden, wobei mit $t_e$, die zu minimierende Endzeit bezeichnet wird. Die optimale Lösung des Problems ist damit jene optimale Steuerungsabfolge für die Ansteuerung u*(t) der Antriebe 2, 8a, 8b, 8c, 8d, welche das System in minimaler Endzeit t* in den gewünschten Endzustand $\varphi_d$ überführt.

Weiterhin unterliegt das System diversen Beschränkungen, welche durch das Optimierungsproblem berücksichtig werden müssen und in Form von Ungleichungen, wie folgt, formuliert werden können:
Zum einen erfolgen Beschränkungen der Gelenkstellungen. Die Knickgelenke 7a, 7b, 7c, 7d des Knickmastes 5 und auch das Drehwerk mit dem Mastbock 3 weisen im Allgemeinen einen beschränkten Verschwenkbereich auf, sodass die Schwenkwinkel $\varphi_i$ für $i$ = 1, ..., $N$ den Ungleichungen

$$\varphi_{i,min} \leq \varphi_i \leq \varphi_{i,max}$$

und der Drehwerkwinkel $\varphi_{DW}$ der Ungleichung

$$\varphi_{DW,min} \leq \varphi_{DW} \leq \varphi_{DW,max}$$

genügen müssen.

Zum anderen beschränken die maximal erreichbaren Verschwenkgeschwindigkeiten der einzelnen Knickgelenke 7a, 7b, 7c, 7d und des Drehwerks mit dem Mastbock 3, bewirkt durch die Antriebe 2, 8a, 8b, 8c, 8d, das System. Die Verschwenkgeschwindigkeiten, mit denen die einzelnen Mastfunktionen, also die Knickgelenke 7a, 7b, 7c, 7d und das Drehwerk mit dem Mastbock 3, bewegt werden können, sind im Allgemeinen nach oben und unten in der Form

$$u_{i,min} \leq u_i \leq u_{i,max}$$

für $i$ = 1, ..., $N$ und
$u_{DW,min} \leq u_{DW} \leq u_{DW,max}$ begrenzt. Verursacht werden diese Beschränkungen in erster Linie durch die hydraulischen Komponenten zur Ansteuerung des dem jeweiligen Knickgelenk 7a, 7b, 7c, 7d zugehörigen Schwenkantriebs 8a, 8b, 8c, 8d bzw. des Drehantriebs 2 für das Drehwerk, da diese auf bestimmte maximale Volumenströme ausgelegt sein müssen.

Eine weitere Beschränkung ist die maximal erlaubte Geschwindigkeit der Endpunkte der Mastarme 6a, 6b, 6c, 6d bzw. der Mastspitze 10 hinsichtlich gesetzlich vorgeschriebener Normen. Die Verfahrgeschwindigkeit bei Großmanipulatoren ist normalerweise begrenzt, da eine zu schnelle Bewegung des Knickmastes 5 eine Gefährdung für die in der Umgebung befindlichen Personen darstellt. Zur Gewährleistung der Betriebssicherheit existieren daher gesetzliche Normen, die die zulässige Maximalgeschwindigkeit der Spitze des Knickmastes festlegen. Die von den Normen geforderte Beschränkung der Bewegungsgeschwindigkeit des Knickmastes 5 bzw. der Endpunkte der einzelnen Mastarme 6a, 6b, 6c, 6d lässt sich anhand der kinematischen Beschreibung des Knickmastes 5 in der Form

$$\dot{\mathbf{x}}_{EP,i} = \mathbf{J}_{EP,i}(\boldsymbol{\varphi})\dot{\boldsymbol{\varphi}} \leq \dot{\mathbf{x}}_{EP,max}$$

$$\mathbf{J}_{EP,i}(\boldsymbol{\varphi}) = \frac{\partial \mathbf{f}_{EP,i}(\boldsymbol{\varphi})}{\partial(\boldsymbol{\varphi})}$$

angeben.

Außerdem ist eine Beschränkung der maximal zulässigen kinetischen Energie des Systems zur Vermeidung von zu hohen Belastungen der mechanischen Konstruktion sinnvoll.

$$E_{kin} = \sqrt{\frac{1}{2}\dot{\boldsymbol{\varphi}}^{\mathrm{T}}\boldsymbol{M}(\boldsymbol{\varphi})\dot{\boldsymbol{\varphi}}} \leq E_{kin,max}$$

Hierbei bezeichnet $\boldsymbol{M}(\varphi)$ die generalisierte Massenmatrix des Systems. Diese Beschränkung ist aufgrund der Auslegung der gegenüber einer konventionellen Maststeuerung erhöhten Maximalgeschwindigkeiten der einzelnen Mastfunktionen, also der Knickgelenke 7a, 7b, 7c, 7d und des Drehwerks mit dem Mastbock 3 erforderlich, da hierdurch auch wesentlich höhere Geschwindigkeiten des Knickmastes 5 auftreten können, welche bei abrupten Bewegungsstopps zu wesentlich erhöhten Kräften führen könnten.

Außerdem sollte die beschränkte Förderleistung der Masthydraulikpumpe berücksichtigt werden, mit der die vorzugsweise hydraulisch angetriebenen Antriebe 2, 8a, 8b, 8c, 8d mit Hydraulikfluid versorgt werden. Die Summe der von der Mastpumpe zu den einzelnen Verbrauchern zufließenden Volumenströme $q_{zu,i}$ der Hydraulikzylinder für $i$ = 1, ...,$N$ sowie $q_{zu,DW}$ für den Hydraulikmotor des Drehantriebs 2 ist durch die Auslegung der Mastpumpe begrenzt.

$$q_{zu,DW} + \sum_{i=1}^{N} q_{zu,i} \leq q_{max}$$

$$q_{zu,i} = f_{q,i}(\varphi_i, \dot{\varphi}_i)$$

Der Maximalwert $q_{max}$ ergibt sich dabei aus der Fördermenge der die Masthydraulik versorgenden Mastpumpe. Vorzugsweise lässt sich die Fördermenge und somit der Maximalwert $q_{max}$ durch Zuschaltung beispielsweise einer bei Betonpumpen typischerweise vorhandenen Speicherladepumpe erhöhen. Üblicherweise versorgt die Speicherladepumpe einen Hydraulikspeicher für ein Umschalten eines Betonschaltventils einer ZweiZylinder-Kolbenpumpe. Um eine höhere Fördermenge der die Masthydraulik versorgenden Pumpen und damit eine höhere Geschwindigkeit bei der Mastbewegung, insbesondere beim Ausklappen des Mastes zu erreichen, ist eine Zuschaltung der Speicherladepumpe sinnvoll. Zu berücksichtigen ist außerdem, dass die Fördermenge von der Drehzahl des Verbrennungsmotors im Großmanipulator 1 abhängig ist. Die Funktionen $f_{q,i}(\varphi_i, \dot{\varphi}_i)$ ergeben sich aus den im Allgemeinen nichtlinearen Zusammenhängen zwischen den Kolbenpositionen $s_{z,i}$ der einzelnen Zylinder der Schwenkantriebe 8a, 8b, 8c, 8d und den Schwenkwinkeln $\varphi_1$, $\varphi_2$, $\varphi_3$, $\varphi_4$, $s_{z,i} = f_{z,i}(\varphi_i)$, bzw. dem daraus folgenden Zusammenhang der Geschwindigkeiten,

$$\dot{s}_{z,i} = \frac{\partial f_{z,i}(\varphi_i)}{\partial \varphi_i}\dot{\varphi}_i.$$

Je nach Bewegungsrichtung der Knickgelenke 7a, 7b, 7c, 7d kann damit aus dem Produkt der Kolbengeschwindigkeit und der jeweiligen Wirkfläche $A_{z,i}$ des Zylinders (Kolben- oder Stangenseite je nach Bewegungsrichtung) der betreffende Volumenstrom $q_{zu,i}$ berechnet werden, $q_{zu,i} = |\dot{s}_{z,i}| A_{z,i}(\text{signum}(\dot{s}_{z,i}))$.

Beim Drehantrieb 2 ergibt sich am drehbaren Mastbock 3 ein linearer Zusammenhang zwischen dem Volumenstrom und der Drehwinkelgeschwindigkeit in Abhängigkeit von der Übersetzung des Getriebes und dem Schluckvolumen des Hydraulikmotors.

Zur Vermeidung von Kollisionen des Knickmastes 5 mit dem Fahrzeug (bestehend aus dem Führerhaus 15 und dem Gestell 4), den Stützen 14a, 14b, 14c, 14d sowie dem Boden muss der Arbeitsraum des Knickmastes 5 eingeschränkt werden. Während die Beschränkung aufgrund des Bodens einfach anhand der Kinematik dargestellt werden kann, müssen das Fahrzeug (bestehend aus dem Führerhaus 15 und dem Gestell 4) und die Stützen 14a, 14b, 14c, 14d als vereinfachte 3D-Objekte berücksichtigt werden. Dabei ist zu beachten, dass der Knickmast 5 aus der Transportstellung (gezeigt in Fig. 2) heraus ausgefahren werden muss, bei welcher der eingeklappte Mast auf dem Gestell 4 des Fahrzeugs aufliegt. Außerdem kann die Vermeidung von Kollisionen mit weiteren 3D-Objekten, wie Häusern, Bäumen oder Stromleitungen, berücksichtigt werden. Diese weiteren Objekte lassen sich durch ein geeignetes Sensorsystem, wie beispielsweise mittels Laser-, Ultraschall- oder Radarabtastung der Baustelle erfassen. Alternativ dazu könnte auch ein Kamerasystem zur Bestimmung der Position und Geometrie möglicher Kollisionsobjekte eingesetzt werden. Zur Vermessung des im Allgemeinen großen Arbeitsraums der Autobetonpumpe kann das Sensorsystem beispielweise an einer oder mehreren autonomen, flugfähigen Drohnen angebracht sein.

Zur mathematischen Beschreibung der Kollisionsbedingungen werden die Mastarme 6a, 6b, 6c, 6d, die Stützen 14a, 14b, 14c, 14d und das Fahrzeug (bestehend aus dem Führerhaus 15 und dem Gestell 4) vereinfacht als geometrische Hüllquader beschrieben, in welche die einzelnen Körper zur Gänze eingehüllt werden können. Die Ausdehnungen der Hüllquader sollten dabei möglichst klein gewählt werden, damit nicht zu restriktive Kollisionsbedingungen entstehen. Für das Fahrzeug werden vorzugsweise zwei Hüllquader gewählt, wobei einer davon das Führerhaus 15 umfasst und ein weiterer den hinteren Teil des Fahrzeugs, also das Gestell 4. Zur Kollisionsvermeidung wird das Einhalten einer Mindestdistanz zwischen den Hüllquadern der Mastarme 6a, 6b, 6c, 6d und den Hüllkörpern der Stützen 14a, 14b, 14c, 14d sowie des Fahrzeugs (bestehend aus dem Führerhaus 15 und dem Gestell 4) in Form einer Nebenbedingung des Optimierungsproblems realisiert. Für die spezielle Formulierung dieser Nebenbedingung sind in der Literatur aus den Themenbereichen Robotik und 3D-Simulation verschiedene Ansätze bekannt.

Zur Lösung des hier gestellten Problems werden für die Berechnung der Abstände bevorzugt sogenannte Distanzfunktionen verwendet. Die hier bevorzugt verwendete Distanzfunktion gehört zur Klasse der Lin-Canny Algorithmen. Sie repräsentiert die Hüllkörper mit unterschiedlichen Hierarchien an Details in einer Baumstruktur und kann somit die nahegelegensten Punkte zweier Hüllkörper effizient eingrenzen. Die zwei nächsten Punkte auf den Hüllkörpern werden mit Hilfe sogenannter Voronoi-Regionen zeitlich verfolgt, womit die Distanzberechnung nach einer Bewegung der Hüllkörper in der Nähe der alten Position der Punkte wiederholt werden kann. Neben der Kollisionsfreiheit der einzelnen Körper untereinander muss zudem die Kollisionsfreiheit der einzelnen Mastarme 6a, 6b, 6c, 6d mit dem Boden sichergestellt werden. Dies kann in einfacher Form dadurch erfolgen, dass die Höhen $h_{EP,i}$ für $i = 1, ..., N$ der Endpunkte der Mastarme 6a, 6b, 6c, 6d, welche jeweils einen Eintrag der Koordinaten $\mathbf{x}_{EP,i}$ darstellen, einen Minimalwert $h_{min}$ nicht unterschreiten dürfen, $h_{EP,i} \geq h_{min}$. Wird der Wert für $h_{min}$ dabei entsprechend großzügig gewählt, gewährleistet die Einhaltung der Ungleichungsbedingung die Kollisionsfreiheit des gesamten Knickmastes 5 mit dem Boden.

Des Weiteren muss der im Normalbetrieb zulässige Kontakt des eingefalteten Knickmastes 5 in der Mastauflage 16, gezeigt in Figur 2, abgebildet werden. Befindet sich der Knickmast 5 in der Mastauflage 16, darf dieser zwar angehoben, aber erst ab einem gewissen Schwenkwinkel für das Knickgelenk 7a gedreht werden. Dies wird in Form einer vom Schwenkwinkel des Knickgelenks 7a, hier $\varphi_1$ genannt, abhängigen Beschränkung $b_{DW}(\varphi_1)$ der Stellgröße für das Drehwerk, hier mit $u_{DW}$ bezeichnet, beschrieben, $-b_{DW}(\varphi_1) \leq u_{DW} \leq b_{DW}(\varphi_1)$.

Außerdem sollte auch bei einer Teilabstützung, gezeigt in Figur 3, die Standsicherheit des Großmanipulators 1 gewährleistet sein. Bei der sogenannten Teilabstützung werden die Stützen 14a, 14b, 14c, 14d nur teilweise und nicht unbedingt vollständig ausgefahren / abgeklappt. Im in Figur 3 angedeuteten Beispiel für eine Teilabstützung sind die Stützen 14a, 14b vollständig ausgefahren / abgeklappt, die Stütze 14c nur teilweise und die Stütze 14d nicht bzw. kaum ausgefahren / abgeklappt. Eine solche Teilabstützung kann erforderlich sein, falls die Gegebenheiten auf der Baustelle keine andere Aufstellungsmöglichkeit des Großmanipulators 1 zulassen, da auf der Seite der nicht oder nur zum Teil ausgefahrenen / abgeklappten Stützen kein Platz zur Verfügung steht (z.B. an einer Straße). Wird der Großmanipulator 1 nur zum Teil abgestützt, muss der Algorithmus zum Berechnen des Ausfaltvorgangs dies berücksichtigen, sodass bei der Steuerungsabfolge nur Maststellungen durchfahren werden, welche auch bei Teilabstützung standsicher sind. Die Ausfahr-/Abklappposition der Stützen 14a, 14b, 14c, 14d wird vorzugsweise über eine geeignete Sensorik messtechnisch erfasst. Die Position der Stützen 14a, 14b, 14c, 14d kann für die Ansteuerung der Antriebe 2, 8a, 8b, 8c, 8d berücksichtigt werden, indem bei bekannter Massenverteilung der Schwerpunkt $c_A(\varphi)$ des Kickmastes 5 in Abhängigkeit der im Ausfaltvorgang auftretenden Schwenkwinkel $\varphi_1$, $\varphi_2$, $\varphi_3$, $\varphi_4$ in den Knickgelenken 7a, 7b, 7c, 7d berechnet wird, um mit diesem und dem als bekannt und konstant anzunehmenden Schwerpunkt des Fahrzeugs $c_F$ sowie der Schwerpunkte

$c_{St,i}(s_{St,i})$ für $i$ = 1,..., 4 der vier Stützen 14a, 14b, 14c, 14d zu beurteilen, ob sich der Schwerpunkt des gesamten Großmanipulators 1 innerhalb des Kippvierecks befindet, welches durch die Endpunkte der Stützen 14a, 14b, 14c, 14d des Gestells 4 gebildet wird. Die Schwerpunkte der einzelnen Stützen 14a, 14b, 14c, 14d sind dabei von deren Ausfahrzustand $s_{St,i}$ abhängig. Zur Gewährleistung der Standsicherheit des Großmanipulators 1 muss nun gelten, dass der horizontale Abstand $r_{c,Kk}$ zur nächstgelegenen Kippkante des Kippvierecks immer ein positives Mindestmaß $r_{c,min} > 0$ aufweist, d.h., $r_{c,Kk} \geq r_{c,min}$. Dabei ist zu beachten, dass der Abstand eines Schwerpunktes außerhalb des Kippvierecks negativ zu bewerten ist.

Zum Berechnen einer zeitoptimierten Steuerungsabfolge für die Ansteuerung der Antriebe 2, 8a, 8b, 8c, und 8d muss eine geeignete Gütefunktion minimiert werden, welche die Gesamtzeit des Faltvorgangs beim Überführen des Kickmastes 5 aus einer Ausgangsposition A in eine Zielposition B oder eine davon direkt abgeleitete Größe als Optimierungsvariable enthält. Die Gütefunktion muss dabei unter Berücksichtigung der oben beschriebenen Gleichungs- und Ungleichungsbedingungen minimiert werden, welche die Beschränkungen des Systems darstellen. Hinsichtlich der Umsetzung des Algorithmus sowie der Formulierung der Gütefunktion sind in der allgemeinen Literatur zum Thema Dynamische Optimierung verschiedenste Varianten bekannt und für die Lösung der Aufgabenstellung einsetzbar. Ein spezieller Ansatz, der zur Lösung der vorliegenden Aufgabenstellung bevorzugt verwendet werden kann, ist der sogenannte TEB-Ansatz (Timed Elastic Band). Bei diesem werden zur Umformulierung des Optimalsteuerungsproblems in ein numerisches Optimierungsproblem die zu findende Steuerungsabfolge für die Ansteuerung der Antriebe 2, 8a, 8b, 8c, und 8d und die Trajektorie des Knickmastes 5 zeitlich mit einer fixen Anzahl $n$ an Abtastpunkten diskretisiert. Es werden die Zeitdifferenz $\Delta t$ zwischen zwei Abtastpunkten sowie die über die Gesamtzeit diskretisierten Zustände $\mathbf{x}_k$ (und Stellgrößen $\mathbf{u}_k$) als Optimierungsvariablen definiert. Diese Variablen werden in der Menge $\beta$ zusammengefasst. Das numerische Optimierungsproblem wird damit wie folgt definiert:

$$V^*(\beta) = \min_{\beta} \Delta t \quad \text{mit}\, \beta := \{\mathbf{x}_1, \mathbf{u}_1, \ldots, \mathbf{x}_{n-1}, \mathbf{u}_{n-1}, \mathbf{x}_n, \Delta t\}$$

$$\text{u.B.v.}\ \mathbf{x}_1 = \mathbf{x}_s,\ \mathbf{x}_n = \mathbf{x}_f,\ \Delta t > 0$$

$$\mathbf{h}_k(\mathbf{x}_{k+1}, \mathbf{x}_k, \mathbf{u}_k, \Delta t) = 0$$

$$\mathbf{g}_k(\mathbf{x}_k, \mathbf{x}_{k+1}, \mathbf{u}_k, \Delta t) \geq 0$$

Der Startzustand mit der Ausgangsposition A wird darin mit $\mathbf{x}_s$ und der gewünschte Endzustand mit der Zielposition B mit $\mathbf{x}_f$ bezeichnet. Zur Erzielung der Zeitoptimalität wird die Gesamtzeit $T_f = (n - 1)\Delta t$, bzw. äquivalent dazu die Zeitdifferenz $\Delta t$ (da $n$ - 1 konstant ist), minimiert. Unter $\mathbf{h}_k$ sind die Gleichheitsnebenbedingungen und unter $\mathbf{g}_k$ die Ungleichheitsnebenbedingungen jeweils zum Zeitpunkt $k$ zusammengefasst. Zur Lösung dieses Optimierungsproblems werden üblicherweise sog. "Sequencial Quadratic Programming Solver" sowie "Interior Point Solver" verwendet. Vorzugsweise kommt ein "Interior Point Solver" zum Einsatz, der die Nebenbedingungen $\mathbf{g}_k$ und $\mathbf{h}_k$ über sogenannte Barrierefunktionen in das Gütemaß mit aufnimmt.

Die Aufschaltung der durch die Lösung des dynamischen Optimierungsproblems ermittelten Steuerungsabfolge für die Ansteuerung der Antriebe 2, 8a, 8b, 8c, 8d auf das reale System des Großmanipulators 1 würde beim idealen, im Modell angenommenen Maschinenverhalten zur Überführung des Knickmastes 5 in den gewünschten Zustand, also die Zielposition B, mit exakt der bei der Optimierung berechneten Trajektorie führen. Bei einem realen Großmanipulator 1 ergeben sich jedoch zwangsläufig Abweichungen, da die über $u_i$ vorgegebenen Winkelgeschwindigkeiten in den Knickgelenken 7a, 7b, 7c, 7d durch die Schwenkantriebe 8a, 8b, 8c, 8d und die vorgegebene Drehgeschwindigkeit für das Drehwerk durch den Drehantrieb 2 nicht exakt umgesetzt werden können. Da sich die Dynamik des Systems näherungsweise wie ein offener Integrator für jede Mastfunktion, also für die Knickgelenke 7a, 7b, 7c, 7d und für das Drehwerk mit dem Mastbock 3, verhält, würde das System ohne einen regulierenden Eingriff unvermeidlich von der Solltrajektorie wegdriften. Aus diesem Grund ist es sinnvoll, die Einhaltung der Trajektorie des Knickmastes 5 zu überwachen und bei zu großen Abweichungen von der Solltrajektorie aktiv regelnd einzugreifen.

Eine einfache Variante für einen solchen Eingriff ist die Implementierung eines Positionsreglers für jede einzelne Mastfunktion. Die Sollwerte für die Regler werden dabei aus der Solltrajektorie generiert. Die Regler garantieren in diesem Fall weitestgehend die Einhaltung des Bewegungspfades, also der Trajektorie ohne die zeitliche Zuordnung, jedoch nicht zwangsweise die Einhaltung der zeitlichen Vorgaben. Dies kann zum Beispiel problematisch sein, wenn geforderte Geschwindigkeiten aufgrund von an den Steuerungsventilen wirkenden Strömungskräften durch die Antriebe 2, 8a, 8b, 8c, 8d nicht umgesetzt werden können. Solche Abweichungen könnte ein Regler nur noch bedingt zeitlich kompensieren. Die geplante Resttrajektorie ausgehend von dem bereits von der Solltrajektorie abweichenden Ist-Zustand könnte entsprechend nicht mehr zeitoptimal sein. Im schlimmsten Fall würde die Regelung bei zu großen Abweichungen die Einhaltung der Kollisionsfreiheit nicht mehr garantieren, sodass die Überführung des Knickmastes 5 aus der Ausgangsposition A in die Zielposition B automatisch oder manuell abgebrochen werden müsste.

Eine gegenüber dem einfachen Positionsregler verbesserte Ausführungsform zur Gewährleistung der Einhaltung der Trajektorie, der Zeitoptimalität und der Randbedingungen ist der Einsatz einer sogenannten modellprädiktiven Regelung, im Englischen auch als MPC ("Model Predictive Control") bezeichnet. Bei dieser wird in fixen Zeitabständen der Ist-Zustand des Systems erfasst und das dynamische Optimierungsproblem mit dem vom Systemmodell prädizierten Verhalten ausgehend von diesem Ist-Zustand, somit als neue Ausgangsposition, wiederholt gelöst. Die neue Lösung wird als Steuerungsabfolge für die Ansteuerung der Antriebe 2, 8a, 8b, 8c, 8d bzw. als Solltrajektorie des Knickmastes 5 von der Steuereinrichtung 9 angesteuert. Damit wird die restliche Trajektorie optimiert und die Einhaltung von kritischen Beschränkungen, wie zum Beispiel der unabdingbaren Kollisionsfreiheit, kann wesentlich besser gewährleistet werden.

Besonders geeignet ist die Nutzung einer zeitoptimierten Steuerungsabfolge für die Ansteuerung der Antriebe 2, 8a, 8b, 8c, 8d beim Ausfalten des Knickmastes 5 im Aufbauvorgang des Großmanipulators 1 auf einer Baustelle. Die Figur 2 zeigt den Großmanipulator 1 in fahrbereiter Konfiguration. Die Stützen 14a, 14b, 14c, 14d des Gestells 4 sind eingefahren und der Knickmast 5 liegt in der Mastauflage 16 auf. Auf der Baustelle angekommen muss der Benutzer die Stützen 14a, 14b, 14c, 14d horizontal ausfahren und Stützplatten auslegen. Anschließend werden die Stützen 14a, 14b, 14c, 14d vertikal ausgefahren / abgeklappt und das Gestell 4 nivelliert. Im Anschluss daran muss der noch vollständig eingeklappte Knickmast 5 ausgeklappt werden. Hierbei unterstützt den Benutzer die erfindungsgemäß ausgeführte Steuerungseinrichtung 9 und reduziert hierdurch die Aufbauzeit, die erforderlich ist um den Großmanipulator 1 beispielhaft in die in Figur 1 dargestellte Konfiguration zu bringen.

Mit dem oben vorgestellten Ausführungsbeispiel wird eine erfindungsgemäße Maststeuerung offenbart, bei der die Steuereinrichtung 9 dazu eingerichtet ist, den Knickmast 5 mit einer zeitoptimierten Steuerungsabfolge für die Ansteuerung der Antriebe 2, 8a, 8b, 8c, 8d aus einer Ausgangsposition A des Knickmastes 5 autonom in eine vorgegebene Zielposition B des Knickmastes 5 zu überführen. Die Zeitoptimierung zielt in diesem Ausführungsbeispiel auf eine Minimierung der Fahrzeit des Knickmastes 5 von der Ausgangsposition A zu der Zielposition B ab. Es ist anzumerken, dass bei dem vorgestellten Algorithmus mit "zeitoptimiert" nicht unbedingt die absolut minimale Fahrzeit gemeint ist, da ein derartiger Algorithmus u.U. sehr viel Rechenzeit benötigen würde. Gemeint ist stattdessen eine möglichst geringe Fahrzeit, die unter Berücksichtigung z.B. der verfügbaren Rechenkapazität eines Rechners oder der Steuereinrichtung 9 auf dem Großmanipulator 1, noch vertretbar zu berechnen ist. Zur Erhöhung der Recheneffizienz wäre es z.B. denkbar, bestimmte Abläufe beim Aufbau bzw. Ausfalten des Knickmastes 5, welche bei allen Szenarien näherungsweise gleich verlaufen, als einheitlichen Ablauf fix im Speicher 12 zu hinterlegen. Dies könnten etwa die ersten 10 bis 30 Sekunden beim Verfahren aus der Mastauflage 16 sein, welche besonders kritisch hinsichtlich möglicher Eigenkollisionen mit dem Gestell 4 und den Stützen 14a, 14b, 14c, 14d sind, was bei einer Online-Berechnung sehr rechenintensiv sein kann. Eine solche Unterteilung des gesamten Ausfaltvorgangs würde jedoch zum Verlust der absolut minimalen Fahrzeit führen. Es wäre eine suboptimale Lösung, welche nur geringfügig langsamer wäre. Der Grundgedanke der Erfindung bliebe jedoch trotzdem erhalten. Alternativ zur Forderung der Zeitoptimalität könnte z.B. auch eine als realistisch betrachtete Maximalzeit für den Fahrvorgang (z.B. eine Minute) fix im Algorithmus vorgegeben werden, welche durch die zu berechnende Steuerungsabfolge eingehalten werden muss. Hierbei würde der Algorithmus abgebrochen, sobald eine Lösung des dynamischen Optimierungsproblems gefunden wird, welche diese Vorgabe einhält. Auch in einem solchen Fall ist die absolute Zeitoptimalität nicht mehr gegeben, obwohl die Gesamtzeit für den Mastaufbau durch die berechnete Steuerungsabfolge im Vergleich zu einer typischen, manuellen Bedienung massiv reduziert werden kann, was durch die erfindungsgemäße autonome Überführung in die Zielposition B erreicht wird.

In einer weiteren Gestaltungsvariante wäre es denkbar, bei der Berechnung der Steuerungsabfolge einen möglichst großen Abstand zu Hindernissen zu erzielen und diese Abstände als zu optimierende Größe in die Gütefunktion aufzunehmen. Die beiden sich widersprechenden Forderungen Zeitoptimalität und maximaler Abstand müssten dann unterschiedlich gewichtet werden. Die Lösung des Optimalsteuerungsproblems stellt dann einen Kompromiss zwischen diesen beiden Forderungen dar, welcher je nach Gewichtung unterschiedlich ausfällt. Die Gesamtzeit wäre in diesem Fall nicht mehr absolut minimal, aber die Steuerungsabfolge wäre immer noch hinsichtlich der Zeit optimiert.

Die Figur 3 zeigt beispielhaft eine grafische Darstellung 11, mithilfe welcher der Benutzer die Zielposition B des Knickmastes 5 durch Auswahl von Schaltflächen auf der grafischen Darstellung 11 bestimmen kann. Die grafische Darstellung 11 zeigt den Großmanipulator 1 aus der Vogelperspektive. Wie in Figur 3 zu erkennen ist, deutet die grafische Darstellung 11 an, dass über die Stützen 14a, 14b, 14c und 14d des Gestells 4 eine Teilabstützung gewährleistet ist. Bei dieser Abstützungskonfiguration sind lediglich die Stützen 14a, 14b und 14c horizontal ausgefahren / abgeklappt, wobei die Stütze 14c zudem nur teilweise ausgefahren / abgeklappt ist. Die nicht ausgefahrene / abgeklappte Stütze 14d ist hier nicht dargestellt, stützt das Gestell 4 aber dennoch vertikal auf dem Untergrund ab. Aufgrund dieser Abstützungskonfiguration sind nur bestimmte Zielpositionen B auswählbar, was durch die Punkte in den anfahrbaren Sektoren angedeutet ist. Durch Auswahl einer der möglichen Zielpositionen B wird der Steuereinrichtung 9 die Zielposition B vorgegeben, in welche der Knickmast 5 von der aktuellen Position bzw. der Startposition A (welche durch die Mastsensorik messtechnisch erfasst wird), z.B. Knickmast 5 eingefaltet, mit einer zeitoptimierten Steuerungsabfolge für die Ansteuerung der Antriebe 2, 8a, 8b, 8c, 8d autonom überführt werden soll. Nach Auswahl der Zielposition B kann zudem die gewünschte Höhe der Mastspitze 10 vom Boden zusätzlich eingegeben werden. Wie in Figur 3 weiterhin angedeutet ist, besteht zwischen der grafischen Darstellung 11 und der Steuereinrichtung 9 mit dem Speicher 12 und der Recheneinheit 13 eine Verbindung, sodass die Auswahl über die grafische Darstellung 11 durch den Benutzer von der Steuereinrichtung 9 erfasst und verarbeitet wird. Die Vorgabe der Zielposition für die Mastspitze kann auch durch den Benutzer anhand von numerischen Eingaben der Sollkoordinaten erfolgen.

Anstelle des Einsatzes des oben beschriebenen Optimierungsalgorithmus für jeden Fahrvorgang ist es auch denkbar, für verschiedene Standard-Ausgangspositionen A (z.B. Knickmast 5 in Auflage 16) und Standard-Zielpositionen B, wie beispielsweise in Fig. 3 gezeigt, möglichst günstige Steuerungsabfolgen einfach manuell zu ermitteln oder offline, beispielsweise mit dem vorgestellten Algorithmus, zu berechnen und diese Steuerungsabfolgen in einem Datenspeicher 12 abrufbar zu hinterlegen, sodass es nicht notwendig ist für Standard-Szenarien einen u.U. langwierigen Rechenvorgang vor oder während des Ausfahrvorganges des Knickmastes 5 durchzuführen.

Alternativ könnte der Benutzer durch die Positionierung einer Fernsteuereinrichtung oder eines anderen funktechnischen Gerätes an der Zielposition die Zielposition vorgeben, indem die Zielposition relativ zum Großmanipulator 1 mittels eines geeigneten Messsystems, z.B. Funk-Triangulationsmessung oder satellitengestütztes Positioniersystem (GPS, Galileo), ermittelt wird.

Bezuaszeichenliste

| | |
|---|---|
| 1 | Großmanipulator / Autobetonpumpe |
| 2 | Drehantrieb |
| 3 | Mastbock |
| 4 | Gestell |
| 5 | Knickmast |
| 6a, 6b, 6c, 6d | erster bis vierter Mastarm |
| 7a, 7b, 7c, 7d | erstes bis viertes Knickgelenk |
| 8a, 8b, 8c, 8d | erster bis vierter Schwenkantrieb |
| 9 | Steuereinrichtung |
| 10 | Mastspitze |
| 11 | graphische Darstellung |
| 12 | Speicher |
| 13 | Recheneinheit |
| 14a, 14b, 14c, 14d | Stützen |
| 15 | Führerhaus |
| 16 | Mastauflage |
| A | Ausgangspostition |
| B | Zielposition |
| $\Theta$ | Drehwinkel |
| $\varphi_1, \varphi_2, \varphi_3, \varphi_4$ | Schwenkwinkel der Mastgelenke |

**Patentansprüche**

1. Großmanipulator (1), insbesondere Autobetonpumpe, mit einem um eine vertikale Achse mittels eines Drehantriebs (2) drehbaren Mastbock (3), der auf einem Gestell (4) angeordnet ist, einem Knickmast (5), der zwei oder mehr Mastarme (6a, 6b, 6c, 6d) umfasst, wobei die Mastarme (6a, 6b, 6c, 6d) über Knickgelenke (7a, 7b, 7c, 7d) mit dem jeweils benachbarten Mastbock (3) oder Mastarm (6a, 6b, 6c, 6d) mittels je eines Schwenkantriebs (8a, 8b, 8c, 8d) schwenkbeweglich verbunden sind, und mit einer die Antriebe (2, 8a, 8b, 8c, 8d) ansteuernden Steuereinrichtung (9) für die Mastbewegung,
**dadurch gekennzeichnet,**
**dass** die Steuereinrichtung (9) dazu eingerichtet ist, eine zeitoptimierte Steuerungsabfolge für die Ansteuerung der Antriebe (2, 8a, 8b, 8c, 8d) durch numerisches Lösen eines dynamischen Optimierungsproblems mit Randbedingungen zu berechnen, indem eine Gütefunktion minimiert wird, welche die Gesamtzeit eines Faltvorgangs beim Überführen des Kickmastes (5) aus einer Ausgangsposition (A) in eine Zielposition (B) oder eine davon direkt abgeleitete Größe als Optimierungsvariable enthält, wobei die Steuereinrichtung (9) dazu eingerichtet ist, den Knickmast (5) mit der Steuerungsabfolge für die Ansteuerung der Antriebe (2, 8a, 8b, 8c, 8d) aus der Ausgangsposition (A) des Knickmastes (5) autonom und zeitoptimiert in die vorgegebene Zielposition (B) des Knickmastes (5) zu überführen.

2. Großmanipulator (1) nach Anspruch 1, **dadurch gekennzeichnet, dass** der Knickmast eine Mastspitze (10) aufweist, wobei die Zielposition (B) des Knickmastes (5) durch die vorgegebene Position der Mastspitze (10) definiert ist.

3. Großmanipulator (1) nach Anspruch 1 oder 2, **dadurch gekennzeichnet, dass** die Vorgabe der Zielposition (B) des Knickmastes (5) durch Auswahl in einer grafischen Darstellung (11) erfolgt, wobei die grafische Darstellung (11) eine Auswahl der möglichen Zielpositionen (B) des Knickmastes (5) bietet.

4. Großmanipulator (1) nach einem der Ansprüche 1 bis 3, **dadurch gekennzeichnet, dass** die Steuereinrichtung (9) die Steuerungsabfolge für die Ansteuerung der Antriebe (2, 8a, 8b, 8c, 8d) in der Weise ermittelt, dass die Gesamtzeit für die Überführung des Knickmastes (5) aus einer Ausgangsposition (A) in eine vorgegebene Zielposition (B) minimal ist.

5. Großmanipulator (1) nach einem der Ansprüche 1 bis 3, **dadurch gekennzeichnet, dass** die Steuereinrichtung (9) die Steuerungsabfolge für die Ansteuerung der Antriebe (2, 8a, 8b, 8c, 8d) in der Weise ermittelt, dass die Gesamtzeit für die Überführung des Knickmastes (5) aus einer Ausgangsposition (A) in eine vorgegebene Zielposition (B) eine vordefinierte Maximalzeit nicht überschreitet.

6. Großmanipulator (1) nach einem der Ansprüche 1 bis 5, **dadurch gekennzeichnet, dass** eine Mastsensorik zur Erfassung der Lage mindestens eines Punktes des Knickmastes (5) oder eines Schwenkwinkels ($\varphi_1$, $\varphi_2$, $\varphi_3$, $\varphi_4$) zumindest eines Knickgelenks vorgesehen ist, wobei die Steuereinrichtung (9) dazu eingerichtet ist, die Position des Knickmastes (5) basierend auf dem Ausgangssignal der Mastsensorik zu bestimmen.

7. Großmanipulator (1) nach Anspruch 6, **dadurch gekennzeichnet, dass** die Steuereinrichtung (9) dazu eingerichtet ist, basierend auf dem Ausgangssignal der Mastsensorik die Ausgangsposition (A) des Knickmastes (5) zu bestimmen.

8. Großmanipulator (1) nach Anspruch 6 oder 7, **dadurch gekennzeichnet, dass** die Steuereinrichtung (9) dazu eingerichtet ist, basierend auf dem Ausgangssignal der Mastsensorik, eine Steuerungsabfolge für die Ansteuerung der Antriebe (2, 8a, 8b, 8c, 8d) zur autonomen Überführung des Knickmastes (5) in eine vorgegebene Zielposition (B) des Knickmastes (5) zu ermitteln.

9. Großmanipulator (1) nach einem der Ansprüche 1 bis 8, **dadurch gekennzeichnet, dass** die Steuereinrichtung (9) einen Speicher (12) aufweist, wobei der Speicher (12) auslesbare Steuerungsabfolgen für die Ansteuerung der Antriebe (2, 8a, 8b, 8c, 8d) umfasst.

10. Großmanipulator (1) nach einem der vorhergehenden Ansprüche, **dadurch gekennzeichnet, dass** als Randbedingungen für das dynamische Optimierungsproblem der Schwenkbereich der einzelnen Knickgelenke (7a, 7b, 7c, 7d) und / oder die maximal erreichbaren Verschwenkgeschwindigkeiten der einzelnen Knickgelenke (7a, 7b, 7c, 7d) und / oder die maximal erlaubte Geschwindigkeit der Mastspitze (10) und / oder die maximal zulässige kinetische Energie des Knickmastes (5) und / oder die Fördermenge einer die hydraulischen Antriebe (2, 8a, 8b, 8c, 8d) versorgenden Hydraulikpumpe und / oder die Vermeidung von Kollisionen und / oder eine Abstützungskonfiguration des Großmanipulators (1) vorgesehen sind.

11. Verfahren zur Steuerung der Bewegung eines Knickmastes (5) eines Großmanipulators (1), insbesondere einer Autobetonpumpe, mit einem um eine vertikale Achse mittels eines Drehantriebs (2) drehbaren Mastbock (3), der auf einem Gestell (4) angeordnet ist, einem Knickmast (5), der zwei oder mehr Mastarme (6a, 6b, 6c, 6d) umfasst, wobei die Mastarme (6a, 6b, 6c, 6d) über Knickgelenke (7a, 7b, 7c, 7d) mit dem jeweils benachbarten Mastbock (3) oder Mastarm (6a, 6b, 6c, 6d) mittels je eines Schwenkantriebs (8a, 8b, 8c, 8d) schwenkbeweglich verbunden sind, mit einer die Antriebe (2, 8a, 8b, 8c, 8d) ansteuernden Steuereinrichtung (9) für die Mastbewegung,
**dadurch gekennzeichnet,**
**dass** die Steuereinrichtung (9) eine zeitoptimierte Steuerungsabfolge für die Ansteuerung der Antriebe (2, 8a, 8b, 8c, 8d) durch numerisches Lösen eines dynamischen Optimierungsproblems mit Randbedingungen berechnet, indem eine Gütefunktion minimiert wird, welche die Gesamtzeit eines Faltvorgangs beim Überführen des Kickmastes

(5) aus einer Ausgangsposition (A) in eine Zielposition (B) oder eine davon direkt abgeleitete Größe als Optimierungsvariable enthält, wobei die Antriebe (2, 8a, 8b, 8c, 8d) mit der Steuerungsabfolge von der Steuereinrichtung (9) angesteuert werden und der Knickmast (5) mit dieser Steuerungsabfolge aus der Ausgangsposition (A) des Knickmastes (5) autonom und zeitoptimiert in die vorgegebene Zielposition (B) des Knickmastes (5) überführt wird.

**12.** Verfahren nach Anspruch 11, **dadurch gekennzeichnet, dass** die Steuereinrichtung (9) eine Steuerungsabfolge für die Ansteuerung der Antriebe (2, 8a, 8b, 8c, 8d) auswählt, für welche die Gesamtzeit für die Überführung des Knickmastes (5) aus einer Ausgangsposition (A) in eine vorgegebene Zielposition (B) minimal ist.

**13.** Verfahren nach Anspruch 11 oder 12, **dadurch gekennzeichnet, dass** von der Steuereinrichtung (9), basierend auf dem Ausgangssignal einer Mastsensorik zur Erfassung der Lage mindestens eines Punktes des Knickmastes (5) oder eines Schwenkwinkels ($\varphi_1$, $\varphi_2$, $\varphi_3$, $\varphi_4$ ) zumindest eines Knickgelenks (7a, 7b, 7c, 7d), eine Steuerungsabfolge für die Ansteuerung der Antriebe (2, 8a, 8b, 8c, 8d) zur Überführung des Knickmastes (5) in eine vorgegebene Zielposition (B) des Knickmastes (5) ermittelt wird.

**14.** Verfahren nach einem der Ansprüche 11 bis 13, **dadurch gekennzeichnet, dass** von der Steuereinrichtung (9) eine Steuerungsabfolge für die Ansteuerung der Antriebe (2, 8a, 8b, 8c, 8d) aus einer Ausgangsposition (A) des Knickmastes (5) in eine vorgegebene Zielposition (B) des Knickmastes (5) ausgewählt oder berechnet wird.

**15.** Verfahren nach einem der Ansprüche 11 bis 14, **dadurch gekennzeichnet, dass** als Randbedingungen für das dynamische Optimierungsproblem der Schwenkbereich der einzelnen Knickgelenke (7a, 7b, 7c, 7d) und / oder die maximal erreichbaren Verschwenkgeschwindigkeiten der einzelnen Knickgelenke (7a, 7b, 7c, 7d) und / oder die maximal erlaubte Geschwindigkeit der Mastspitze (10) und / oder die maximal zulässige kinetische Energie des Knickmastes (5) und / oder die Fördermenge einer die hydraulischen Antriebe (2, 8a, 8b, 8c, 8d) versorgenden Hydraulikpumpe und / oder die Vermeidung von Kollisionen und / oder eine Abstützungskonfiguration des Großmanipulators (1) vorgesehen sind.

## Claims

**1.** Large manipulator (1), in particular truck-mounted concrete pump, comprising a boom pedestal (3) rotatable about a vertical axis by means of a rotary drive (2), which pedestal is arranged on a frame (4), an articulated boom (5) comprising two or more boom arms (6a, 6b, 6c, 6d), wherein the boom arms (6a, 6b, 6c, 6d) are pivotally-movably connected, via articulated joints (7a, 7b, 7c, 7d), to the respectively adjacent boom pedestal (3) or boom arm (6a, 6b, 6c, 6d) by means of in each case one pivot drive (8a, 8b, 8c, 8d), and comprising a control device (9) controlling the drives (2, 8a, 8b, 8c, 8d) for the boom movement,
**characterized in that**
the control device (9) is configured to calculate a time-optimized control sequence for controlling the drives (2, 8a, 8b, 8c, 8d) by means of numerically solving a dynamic optimization problem with boundary conditions by minimizing a power function containing a total time of a folding operation when transferring the articulated boom (5) from an initial position (A) to a target position (B) or a variable directly derived therefrom as an optimization variable, wherein the control device (9) is configured to, in an autonomous and time-optimized manner, transfer the articulated boom (5) from the initial position (A) of the articulated boom (5) to the predetermined target position (B) of the articulated boom (5) by means of the control sequence for controlling the drives (2, 8a, 8b, 8c, 8d).

**2.** Large manipulator (1) according to claim 1, **characterized in that** the articulated boom comprises a boom tip (10), wherein the target position (B) of the articulated boom (5) is defined by the predetermined position of the boom tip (10).

**3.** Large manipulator (1) according to claim 1 or 2, **characterized in that** predefining the target position (B) of the articulated boom (5) takes place by selection in a graphical presentation (11), wherein the graphical presentation (11) offers a selection of the possible target positions (B) of the articulated boom (5).

**4.** Large manipulator (1) according to one of claims 1 to 3, **characterized in that** the control device (9) determines the control sequence for controlling the drives (2, 8a, 8b, 8c, 8d) in such a way that the total time for the transfer of the articulated boom (5) from an initial position (A) to a predetermined target position (B) is minimal.

**5.** Large manipulator (1) according to one of claims 1 to 3, **characterized in that** the control device (9) determines the control sequence for controlling the drives (2, 8a, 8b, 8c, 8d) in such a way that the total time for the transfer of the articulated boom (5) from an initial position (A) to a predetermined target position (B) does not exceed a predefined maximum time.

6. Large manipulator (1) according to one of claims 1 to 5, **characterized in that** a boom sensor system for detecting the position of at least one point of the articulated boom (5) or of a pivot angle ($\varphi_1$, $\varphi_2$, $\varphi_3$, $\varphi_4$) of at least one articulated joint is provided, wherein the control device (9) is configured to identify the position of the articulated boom (5) on the basis of the output signal of the boom sensor system.

7. Large manipulator (1) according to claim 6, **characterized in that** the control device (9) is configured to identify the initial position (A) of the articulated boom (5) on the basis of the output signal of the boom sensor system.

8. Large manipulator (1) according to claim 6 or 7, **characterized in that** the control device (9) is configured to determine, on the basis of the output signal of the boom sensor system, a control sequence for controlling the drives (2, 8a, 8b, 8c, 8d) for the autonomous transfer of the articulated boom (5) to a predetermined target position (B) of the articulated boom (5).

9. Large manipulator (1) according to one of claims 1 to 8, **characterized in that** the control device (9) comprises a memory (12), wherein the memory (12) includes readable control sequences for controlling the drives (2, 8a, 8b, 8c, 8d).

10. Large manipulator (1) according to one of the preceding claims, **characterized in that** the pivot range of the individual articulated joints (7a, 7b, 7c, 7d) and/or the maximum achievable pivot speeds of the individual articulated joints (7a, 7b, 7c, 7d) and/or the maximum permissible speed of the boom tip (10) and/or the maximum permissible kinetic energy of the articulated boom (5) and/or the capacity of a hydraulic pump supplying the hydraulic drives (2, 8a, 8b, 8c, 8d) and/or the prevention of collisions and/or a bracing configuration of the large manipulator (1) are provided as boundary conditions for the dynamic optimization problem.

11. Method for controlling the movement of an articulated boom (5) of a large manipulator (1), in particular a truck-mounted concrete pump, comprising a boom pedestal (3) rotatable about a vertical axis by means of a rotary drive (2), which pedestal is arranged on a frame (4), an articulated boom (5) comprising two or more boom arms (6a, 6b, 6c, 6d), wherein the boom arms (6a, 6b, 6c, 6d) are pivotally-movably connected, via articulated joints (7a, 7b, 7c, 7d), to the respectively adjacent boom pedestal (3) or boom arm (6a, 6b, 6c, 6d) by means of in each case one pivot drive (8a, 8b, 8c, 8d), and comprising a control device (9) controlling the drives (2, 8a, 8b, 8c, 8d) for the boom movement,
**characterized in that**
the control device (9) calculates a time-optimized control sequence for controlling the drives (2, 8a, 8b, 8c, 8d) by means of numerically solving a dynamic optimization problem with boundary conditions by minimizing a power function containing a total time of a folding operation when transferring the articulated boom (5) from an initial position (A) to a target position (B) or a variable directly derived therefrom as an optimization variable, wherein the drives (2, 8a, 8b, 8c, 8d) are controlled with the control sequence by the control device (9) and, with this control sequence, the articulated boom (5) is transferred from the initial position (A) of the articulated boom (5) to the predetermined target position (B) of the articulated boom (5) in an autonomous and time-optimized manner.

12. Method according to claim 11, **characterized in that** the control device (9) selects a control sequence for controlling the drives (2, 8a, 8b, 8c, 8d), for which the total time for transfer of the articulated boom (5) from an initial position (A) to a predetermined target position (B) is minimal.

13. Method according to claim 11 or 12, **characterized in that** a control sequence for controlling the drives (2, 8a, 8b, 8c, 8d) for transferring the articulated boom (5) to a predetermined target position (B) of the articulated boom (5) is determined by the control device (9) on the basis of the output signal of a boom sensor system for detecting the position of at least one point of the articulated boom (5) or of a pivot angle ($\varphi_1$, $\varphi_2$, $\varphi_3$, $\varphi_4$) of at least one articulated joint (7a, 7b, 7c, 7d).

14. Method according to one of claims 11 to 13, **characterized in that** a control sequence for controlling the drives (2, 8a, 8b, 8c, 8d) from an initial position (A) of the articulated boom (5) to a predetermined target position (B) of the articulated boom (5) is selected or calculated by the control device (9).

15. Method according to one of claims 11 to 14, **characterized in that** the pivot range of the individual articulated joints (7a, 7b, 7c, 7d) and/or the maximum achievable pivot speeds of the individual articulated joints (7a, 7b, 7c, 7d) and/or the maximum permissible speed of the boom tip (10) and/or the maximum permissible kinetic energy of the articulated boom (5) and/or the capacity of a hydraulic pump supplying the hydraulic drives (2, 8a, 8b, 8c, 8d) and/or the prevention of collisions and/or a bracing configuration of the large manipulator (1) are provided as boundary conditions for the dynamic optimization problem.

**Revendications**

1. Manipulateur de grande taille (1), en particulier pompe à béton automotrice, comportant un support de mât (3), qui peut tourner sur un axe vertical au moyen d'un entraînement en rotation (2) et qui est disposé sur un châssis (4), un mât articulé (5), qui comprend deux ou plus de deux bras de mât (6a, 6b, 6c, 6d), les bras de mât (6a, 6b, 6c, 6d) étant reliés, par le biais d'articulations (7a, 7b, 7c, 7d), au support de mât (3) ou au bras de mât (6a, 6b, 6c, 6d) respectivement voisin de manière mobile en pivotement au moyen respectivement d'un entraînement en pivotement (8a, 8b, 8c, 8d), et un dispositif de commande (9) actionnant les entraînements (2, 8a, 8b, 8c, 8d) pour le mouvement du mât,
**caractérisé en ce que**
le dispositif de commande (9) est configuré pour calculer une séquence de commande pour l'actionnement des entraînements (2, 8a, 8b, 8c, 8d) optimisée en temps par la résolution numérique d'un problème d'optimisation dynamique avec des conditions marginales, en minimisant une fonction de qualité qui contient le temps total d'un processus de pliage lors du transfert du mât articulé (5) d'une position initiale (A) à une position cible (B) ou une grandeur directement dérivée de celui-ci comme variable d'optimisation, le dispositif de commande (9) étant configuré pour transférer le mât articulé (5), avec la séquence de commande pour l'actionnement des entraînements (2, 8a, 8b, 8c, 8d), de la position initiale (A) du mât articulé (5) à la position cible (B) prédéfinie du mât articulé (5) de manière autonome et optimisée en temps.

2. Manipulateur de grande taille (1) selon la revendication 1, **caractérisé en ce que** le mât articulé présente une pointe de mât (10), la position cible (B) du mât articulé (5) étant définie par la position prédéfinie de la pointe de mât (10).

3. Manipulateur de grande taille (1) selon la revendication 1 ou 2, **caractérisé en ce que** la définition de la position cible (B) du mât articulé (5) se fait par sélection dans une représentation graphique (11), la représentation graphique (11) présentant une sélection des positions cibles (B) possibles du mât articulé (5).

4. Manipulateur de grande taille (1) selon l'une des revendications 1 à 3, **caractérisé en ce que** le dispositif de commande (9) détermine la séquence de commande pour l'actionnement des entraînements (2, 8a, 8b, 8c, 8d) de telle manière que le temps total pour le transfert du mât articulé (5) d'une position initiale (A) à une position cible (B) prédéfinie est minimal.

5. Manipulateur de grande taille (1) selon l'une des revendications 1 à 3, **caractérisé en ce que** le dispositif de commande (9) détermine la séquence de commande pour l'actionnement des entraînements (2, 8a, 8b, 8c, 8d) de telle manière que le temps total pour le transfert du mât articulé (5) d'une position initiale (A) à une position cible (B) prédéfinie ne dépasse pas un temps maximal prédéfini.

6. Manipulateur de grande taille (1) selon l'une des revendications 1 à 5, **caractérisé en ce qu'**un système de détection du mât pour détecter la position d'au moins un point du mât articulé (5) ou un angle de pivotement ($\varphi_1$, $\varphi_2$, $\varphi_3$, $\varphi_4$) d'au moins une articulation est prévu, le dispositif de commande (9) étant configuré pour déterminer la position du mât articulé (5) sur la base du signal de sortie du système de détection du mât.

7. Manipulateur de grande taille (1) selon la revendication 6, **caractérisé en ce que** le dispositif de commande (9) est configuré pour déterminer la position initiale (A) du mât articulé (5) sur la base du signal de sortie du système de détection du mât.

8. Manipulateur de grande taille (1) selon la revendication 6 ou 7, **caractérisé en ce que** le dispositif de commande (9) est configuré pour déterminer, sur la base du signal de sortie du système de détection du mât, une séquence de commande pour l'actionnement des entraînements (2, 8a, 8b, 8c, 8d) pour le transfert autonome du mât articulé (5) dans une position cible (B) prédéfinie du mât articulé (5).

9. Manipulateur de grande taille (1) selon l'une des revendications 1 à 8, **caractérisé en ce que** le dispositif de commande (9) présente une mémoire (12), la mémoire (12) comprenant des séquences de commande lisibles pour l'actionnement des entraînements (2, 8a, 8b, 8c, 8d).

**10.** Manipulateur de grande taille (1) selon l'une des revendications précédentes, **caractérisé en ce que** la plage de pivotement des différentes articulations (7a, 7b, 7c, 7d) et/ou les vitesses de pivotement maximales atteignables des différentes articulations (7a, 7b, 7c, 7d) et/ou la vitesse maximale autorisée de la pointe de mât (10) et/ou l'énergie cinétique maximale admissible du mât articulé (5) et/ou le débit de refoulement d'une pompe hydraulique alimentant les entraînements hydrauliques (2, 8a, 8b, 8c, 8d) et/ou un système d'évitement des collisions et/ou une configuration de stabilisation du manipulateur de grande taille (1) sont prévus en tant que conditions marginales pour le problème d'optimisation dynamique.

**11.** Procédé de commande du mouvement d'un mât articulé (5) d'un manipulateur de grande taille (1), en particulier d'une pompe à béton automotrice, comportant un support de mât (3), qui peut tourner sur un axe vertical au moyen d'un entraînement en rotation (2) et qui est disposé sur un châssis (4), un mât articulé (5), qui comprend deux ou plus de deux bras de mât (6a, 6b, 6c, 6d), les bras de mât (6a, 6b, 6c, 6d) étant reliés, par le biais d'articulations (7a, 7b, 7c, 7d), au support de mât (3) ou au bras de mât (6a, 6b, 6c, 6d) respectivement voisin de manière mobile en pivotement au moyen respectivement d'un entraînement en pivotement (8a, 8b, 8c, 8d), un dispositif de commande (9) actionnant les entraînements (2, 8a, 8b, 8c, 8d) pour le mouvement du mât,
**caractérisé en ce que**
le dispositif de commande (9) calcule une séquence de commande optimisée en temps pour l'actionnement des entraînements (2, 8a, 8b, 8c, 8d) par la résolution numérique d'un problème d'optimisation dynamique avec des conditions marginales, en minimisant une fonction de qualité qui contient le temps total d'un processus de pliage lors du transfert du mât articulé (5) d'une position initiale (A) à une position cible (B) ou une grandeur directement dérivée de celui-ci comme variable d'optimisation, les entraînements (2, 8a, 8b, 8c, 8d) étant actionnés par le dispositif de commande (9) avec la séquence de commande et le mât articulé (5) étant transféré, avec cette séquence de commande, de la position initiale (A) du mât articulé (5) à la position cible (B) prédéfinie du mât articulé (5) de manière autonome et optimisée en temps.

**12.** Procédé selon la revendication 11, **caractérisé en ce que** le dispositif de commande (9) sélectionne une séquence de commande pour l'actionnement des entraînements (2, 8a, 8b, 8c, 8d), pour laquelle le temps total pour le transfert du mât articulé (5) d'une position initiale (A) à une position cible (B) prédéfinie est minimal.

**13.** Procédé selon la revendication 11 ou 12, **caractérisé en ce qu'**une séquence de commande pour l'actionnement des entraînements (2, 8a, 8b, 8c, 8d) pour le transfert du mât articulé (5) dans une position cible (B) prédéfinie du mât articulé (5) est déterminée par le dispositif de commande (9) sur la base du signal de sortie d'un système de détection du mât pour détecter la position d'au moins un point du mât articulé (5) ou un angle de pivotement ($\varphi_1$, $\varphi_2$, $\varphi_3$, $\varphi_4$) d'au moins une articulation (7a, 7b, 7c, 7d).

**14.** Procédé selon l'une des revendications 11 à 13, **caractérisé en ce qu'**une séquence de commande pour l'actionnement des entraînements (2, 8a, 8b, 8c, 8d) d'une position initiale (A) du mât articulé (5) à une position cible (B) prédéfinie du mât articulé (5) est sélectionnée ou calculée par le dispositif de commande (9).

**15.** Procédé selon l'une des revendications 11 à 14, **caractérisé en ce que** la plage de pivotement des différentes articulations (7a, 7b, 7c, 7d) et/ou les vitesses de pivotement maximales atteignables des différentes articulations (7a, 7b, 7c, 7d) et/ou la vitesse maximale autorisée de la pointe de mât (10) et/ou l'énergie cinétique maximale admissible du mât articulé (5) et/ou le débit de refoulement d'une pompe hydraulique alimentant les entraînements hydrauliques (2, 8a, 8b, 8c, 8d) et/ou un système d'évitement des collisions et/ou une configuration de stabilisation du manipulateur de grande taille (1) sont prévus en tant que conditions marginales pour le problème d'optimisation dynamique.

Fig. 1
1
5
6a
6b
6c
6d
7a
7b
7c
7d
8a
8b
8c
8d
10
14a
14b
14c
14d
15
2
3
4
B

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008017961 A1
- WO 2014166637 A1
- WO 2015109976 A1
- DE 102015108473 A1
- WO 2018100074 A2